# EUROPEAN PATENT APPLICATION

(11) **EP 4 386 195 A1**
(43) Date of publication of application: **19.06.2024**
(21) Application number: 22425059.7
(22) Date of filing: 16.12.2022
(51) Int. Cl.: F02M 37/00, F02M 37/22, F02D 19/06

(54) **A METHANOL FUEL SUPPLY SYSTEM AND A METHOD FOR OPERATING THE METHANOL FUEL SUPPLY SYSTEM**

(71) Applicant: Alfa Laval Corporate AB, 221 00 Lund (SE)
(72) Inventor: Spazzadeschi, Nicoletta, 22036 ERBA (CO) (IT); Casartelli, Daniele, 20852 VILLASANTA (MB) (IT)
(74) Representative: Alfa Laval Attorneys

(57) **Abstract**

The disclosure relates to a methanol fuel supply system (1) for supplying methanol fuel (2) to a marine fuel consuming device (4), the system (1) comprising: a fuel storage tank (6) configured to contain methanol fuel (2) to be delivered to the fuel consuming device (4); a first fuel pump (8), which is fluidly connected to the fuel storage tank (6) and to the fuel consuming device (4). The system (1) comprises a recovery tank (10), which is fluidly connected to the fuel consuming device (4), which recovery tank (10) is configured to collect and recover methanol fuel (2) purged from the fuel consuming device (4). The disclosure further relates to a method for operating the methanol fuel supply system (1).

## Description

### Technical field

The present invention relates to a methanol fuel supply system for supplying methanol fuel to a marine fuel consuming device and a method for operating the methanol fuel supply system. More specifically, the invention relates to a methanol fuel supply system for supplying methanol fuel to a marine fuel consuming device and a method for operating the methanol fuel supply system as defined in the introductory parts of the independent claims.

### Background art

Methanol is one of the strategic fuels to achieve the International Maritime Organization's ambitious decarbonization goals over the next decades. The shipping sector plays a key role in the global economy, transporting people and goods worldwide. Marine vessels contribute to the worldwide carbon dioxide emissions. A strategy has been adopted to progressively reduce the marine industry's greenhouse gas emissions, in line with the Paris Agreement on climate change.

Methanol is also known as methyl alcohol and has the chemical formula CH₃OH. Methanol is traditionally made from fossil feedstocks via syngas. Renewable methanol, instead, is produced either from biomass resulting in bio-methanol or from captured CO₂ and H₂ produced from water by electrolysis via renewable electricity resulting in e-methanol. Compared to other fuels, methanol can reduce CO₂ emissions by 65% to 95%, depending on the feedstock. The use of renewable methanol as a fuel is therefore strategic for achieving shipping decarbonization goals. In addition, its combustion is sulphur oxide-free compared to other conventional fossil fuels.

Methanol is currently used as fuel for propulsion on methanol carriers. The methanol fuel supply system currently on the market is based on a two-pressure stages booster, pumping the fuel from a service tank, located on the deck, to a dual-fuel diesel engine at the required pressure, temperature, flow rate and degree of filtration. When the dual-fuel engine operating mode is switched to diesel, methanol is removed by purging with compressed inert gas.

Current configuration of methanol fuel supply system, based on two-pressure stages of pressurization, also requires two heat exchangers for methanol conditioning and for removing the excess of heat input during pump recirculation in full recirculation mode. The equipment of the two pressure stages can be skid-mounted.

Purged methanol, which is collected in the service tank, might be contaminated with oil from the engine. The design of the service tank is specifically defined to handle the purged methanol, which might be contaminated with the engine oil.

An external pump is used as a low-pressure pump for the current configuration of the fuel supply system.

Considering the strategic role of methanol for the decarbonization, it may be used as fuel for propulsion for ships of higher demands, such as container ships. However, higher-powered engines may require a higher methanol fuel storage volume, which may be difficult to arrange on board of a ship. There is thus a need for a more compact and simplified fuel handling system on board of a ship.

### Summary

As mentioned above, in case of higher-powered engines, a higher fuel storage volume of the fuel storage tank may be required. However, the use of a large fuel storage tank on a deck is not convenient or even not feasible, considering that the deck may be used for other scopes depending on the type of the ship. Arranging the fuel storage tank under the deck and inside the vessel may require a dedicated explosion safe zone, so-called ATEX zone, which is a zone following ATEX workplace and/or equipment directives. A traditional fuel supply system configuration, based on an external low-pressure pump for supplying fuel to the engine, may therefore also require a dedicated explosion safe zone in the ship.

In the current solutions, the external low-pressure pump needs to be arranged to avoid cavitation phenomenon Therefore, the external low-pressure pump is located as close as possible to a service tank and a minimum liquid level is requested in the service tank with reference to an inlet nozzle, in order to reduce the risk of pump cavitation. Therefore, a fuel preparation room must be arranged close to the fuel service tank, accommodating the external low-pressure pump.

Despite known solutions in the field, it would be desirable to develop a methanol fuel supply system for supplying methanol fuel to a marine fuel consuming device and a method for supplying fuel to a marine fuel consuming device by means of a methanol fuel supply system, which overcomes or alleviates at least some of the drawbacks of the prior art.

It is therefore an objective of the present invention to mitigate, alleviate or eliminate one or more of the above-identified deficiencies and disadvantages in the prior art and solve at least the above-mentioned problem.

Further, it is an objective of the present invention to provide a methanol fuel supply system which simplifies the system layout and provides a more compact system compared to the known systems.

Another objective of the present invention is to provide a methanol fuel supply system, which does not require numerous and complex components in order to operate correctly.

A further objective of the present invention is to provide a methanol fuel supply system, which is safe for operators.

These objectives are achieved with a methanol fuel supply system for supplying methanol fuel to a marine fuel consuming device and a method for supplying fuel to a fuel consuming device by means of a methanol fuel supply system according to the appended claims.

According to a first aspect there is provided a methanol fuel supply system for supplying methanol fuel from a fuel storage tank configured to contain methanol fuel to a marine fuel consuming device, the system comprising: a first fuel pump, which is fluidly connected to the fuel storage tank and to the fuel consuming device, characterized in that the system comprises a recovery tank, which is fluidly connected to the fuel consuming device, and a purging circuit configured to purge the fuel consuming device and/or the fuel supply system with an inert gas. The purging circuit is fluidly connected to the recovery tank which recovery tank is configured to collect and recover methanol fuel and inert gas during purging.

By incorporating the recovery tank in the system for receiving the purged methanol fuel, there is no need for a fuel service tank, which leads to a more compact system saving space on the deck.

The methanol fuel supply system comprises components, such as conduits and controllable valves, which are together configured and adapted to cooperate in order to supply methanol to the marine fuel consuming device. A number of marine fuel consuming devices may be arranged in parallel and be supplied with methanol fuel by the methanol fuel supply system.

The methanol fuel may be supplied via conduits comprising controllable valves to the marine fuel consuming device. The marine fuel consuming device may consume the methanol fuel by igniting and burning the methanol fuel. The energy released from methanol combustion may be used as energy for propelling the ship and/or for other uses, e.g., steam generation in boilers and auxiliary power generation devices. The methanol fuel may be held and stored in a liquid form in a storage tank. The tank may completely contain methanol fuel or just a part of the tank may contain methanol fuel. The tank may be operated at ambient temperature. The tank may be pressurized from an atmospheric pressure to approximately 0,2 bar, for example by blanketing with an inert gas, such as nitrogen.

The methanol fuel may be supplied to the fuel consuming device via a main fuel conduit, which fluidly connects the fuel storage tank to the fuel consuming device. A first fuel pump may be connected to the main fuel conduit. The first fuel pump may thus be fluidly connected to the fuel storage tank and the fuel consuming device. The first fuel pump may be designed for sucking the methanol fuel from the fuel storage tank and delivering the fuel along the main fuel conduit.

The recovery tank is configured to receive purged methanol and inert gas, which is used for purging. Further, any contaminations, such as lubrication oil residues in the system from the fuel consuming device, may be received in the recovery tank during purging. The recovery tank is used for collecting purged methanol, inert gas and contaminations. The recovery tank may also be configured for separating inert gas and contaminations from methanol, and to recover methanol. The separation may occur for example by settling of different phases but is not limited thereto Methanol may be transferred from the recovery tank to the main fuel conduit when high level in the recovery tank is detected, and the fuel consuming device is running on methanol. For this reason, the recovery tank may be designed with a volume and size, which allows for an installation in a limited area in the marine vessel. The volume and size of the recovery tank may be smaller than the volume and size of the service tank. The recovery tank may comprise a venting arrangement for venting excess inert gas. The purged methanol is collected in the recovery tank in the fuel supply system and thereby the need for a dedicated service tank design for separation of contaminations in the purged methanol is avoided. This will simplify the system and provide a more compact system compared to known systems. Further, such system will not require numerous and complex components in order to operate correctly. This provides also a system, which is safe for operators.

The system further comprises the purging circuit, which is fluidly connected to the fuel consuming device and the recovery tank, and which purging circuit is configured to remove methanol fuel and any contaminations in the methanol fuel from the fuel consuming device to the recovery tank by means of an inert gas. The purging circuit may be hydraulically connected to the main fuel conduit and may comprise an inert gas source and is designed to supply the inert gas to the methanol fuel supply system. A purging conduit may connect the inert gas source to the main fuel conduit. and the purging conduit may be connected to a fuel valve train of a marine combustion engine. The inert gas source can be the inert gas grid of the marine vessel on which the fuel supply system is installed. This inert gas grid can be hydraulically connected to the main fuel conduit. Alternatively, the inert gas source can comprise one or more dedicated vessels, each containing a predefined amount of an inert gas.

The purging circuit may also be used for leak testing after maintenance of the fuel supply system, as well as that of reducing any oxygen content in said fuel supply system before filling it with the methanol-based fuel. The likelihood of a flammable atmosphere being generated in the fuel supply system is thus reduced. Eventually a critical concentration is reached below which no ignition is possible. The purging circuit may avoid this drawback by creating a non-flammable atmosphere inside the main fuel conduit and inside any other piping connected to said main fuel conduit.

Inerting may be performed at a first startup and at each start up after maintenance of the fuel supply system to remove air and/or oxygen from piping. Before maintenance operations on the fuel supply system, a purging operation can also be performed by pushing the methanol-based fuel back to the fuel storage tank or the recovery tank through one or more drain lines, in order to avoid contact with air and also with operating personnel.

The purging circuit may be provided with one or more nitrogen inlets with filter, one or more pressure indicators and transmitters, one or more drain valves and one or more drain pumps. The purged methanol is collected in the recovery tank in the fuel supply system thereby avoiding the need for a dedicated service tank design for separation of contaminations in the purged methanol. The separation function may be accomplished in the recovery tank in the fuel supply system. The inert gas may be held in an inert gas tank.

The first fuel pump may be arranged in the fuel storage tank. The first fuel pump may be configured to be submerged in the methanol fuel contained in the fuel storage tank, and thus be fluidly connected to the fuel storage tank. Submerging the first fuel pump in the methanol fuel may solve criticalities of cavitation without the need of a residual minimum liquid level in the tank. The use of submerged pumps will also solve the issue of installing an external low pressure stage pump in a dedicated explosion safe zone inside the marine vessel, which leads to no constraints for the position of a fuel preparation room.

The first fuel pump may be controlled by at least one control device. The first fuel pump may be controlled at a variable pressure, which may be variable in a pressure range which allows proper downstream system or equipment operation. For example, the pressure range may be between 2 to 7 bar and a storage temperature, may vary for example between -20°C to 40 °C, but is not limited thereto. The first fuel pump may be a centrifugal pump.

The system may further comprise a high-pressure section in fluid connection with the fuel storage tank and the fuel consuming device and may comprise one or more of: a second fuel pump, which is a high-pressure pump, at least one heat exchanger configured to heat up or cool down methanol temperature, one or more filters, inert gas supply device, a transfer pump for methanol transfer from the recovery tank, suitably to a suction side of the high-pressure pump. According to the present disclosure, a single heat exchanger may be used for temperature regulation of methanol. The high-pressure section may further comprise a heat exchange medium circuit comprising a heat exchange medium tank, pump and at least one heat exchanger configured to keep the temperature of the heat exchange medium at a determined temperature range for heating or cooling the methanol. The temperature may vary for example between 30 and 50°C, but is not limited thereto.

The recovery tank may be fluidly connected by a connecting conduit to a main fuel conduit connecting the storage tank and the first fuel pump to the fuel consuming device. In this way recovered methanol may be returned to the fuel supply system from the recovery tank. Thus, the system may further comprise the second fuel pump, arranged downstream of the first fuel pump and upstream of the fuel consuming device, in fluid connection with the fuel storage tank and the fuel consuming device. The first fuel pump is designed for sucking fuel from the fuel storage tank at a first pressure value and delivering the fuel along the main fuel conduit at a second pressure value, wherein the second pressure value is higher than the first pressure value. The first fuel pump may generate a low-pressure pumping stage, and the first fuel pump may be a low-pressure pump.

The second fuel pump may be placed along the main fuel conduit downstream of the first fuel pump. The recovery tank may be connected via the connecting conduit to the main fuel conduit upstream of the second fuel pump. Thus, the second fuel pump may be placed downstream of the connecting conduit of the recovery tank on the main fuel supply line. The recovery tank may be configured to separate the methanol fuel, inert gas and contaminations from each other and to return the recovered methanol fuel to the fuel consuming device, for example via the connecting conduit.

The second fuel pump may be configured to receive fuel from the first fuel pump at the second pressure value and supply the fuel along the main fuel conduit at a third pressure value, wherein the third pressure value can be equal to or higher than the second pressure value. The third pressure value can be equal to an operative pressure value of the fuel required by the fuel consuming device. The second fuel pump may be a high-pressure pump. It may be e.g., a centrifugal pump. However, in case the first fuel pump has the capacity to generate a pressure equal to or higher than an operative pressure value of the fuel required by the fuel consuming device, the second fuel pump may be superfluous. In this case it may not be necessary to install the second fuel pump in the system.

The fuel consuming device may be a dual-fuel driven fuel consuming device, configured to be driven by a primary fuel in a first operation mode, and to be driven by methanol fuel as a secondary fuel in a second operation mode. In the second operation mode methanol fuel as the secondary fuel is delivered to the fuel consuming device by the methanol fuel supply system. In the first operation mode the delivery of methanol fuel as the secondary fuel to the fuel consuming device is shut off by closing a valve on the main fuel conduit. In the first operation mode, the primary fuel is delivered to the dual-fuel driven fuel consuming device and the dual-fuel driven fuel consuming device is driven by the primary fuel. The primary fuel may be heavy fuel oil or diesel oil or other type of marine fuel, depending on the type of dual-fuel driven fuel consuming device.

The dual-fuel diesel engine may be a marine dual-fuel internal combustion engine. The dual-fuel internal combustion engine may operate on the secondary fuel as methanol fuel and on primary fuels like heavy fuel oil or diesel oil. A separate oil tank, such as a diesel tank, may be fluidly connected to the dual-fuel internal combustion engine.

The marine fuel consuming device may be a boiler. The boiler may be a methanol fueled boiler.

The fuel supply system described above may be configured to feed more than one parallelly connected fuel consuming devices, such as more than one engine. In that case, pressure at the outlet of the system assembly could be different and a parallel methanol feed line may be installed. The feed line may need a dedicated heat exchanger and filters. A further high-pressure pump may additionally be installed.

The system may comprise an additional separator arrangement, which is configured to separate the methanol fuel, inert gas and contaminations in the recovery tank from each other. The separator arrangement may be configured to return the recovered methanol fuel to the fuel consuming device during the second operation mode. The purged methanol fuel, inert gas and contaminations collected in the recovery tank may be separated from each other by the separator arrangement. The separator arrangement may be arranged adjacent to the recovery tank or be arranged in the recovery tank. The separator arrangement may be a settling arrangement or a sedimentation arrangement and can be provided by the recovery tank. The separation arrangement may comprise a filter arrangement.

A skid-mounted assembly provided with a single frame may be arranged to support at least some of the components downstream of the fuel storage tank. The frame can be designed to be as compact as possible and can be readily connected to the fuel storage tank and/or the fuel consuming device. This way it is possible to provide for easy installation of the fuel supply system in any environment, for example inside a marine vessel and/or on a deck of the vessel.

One of the components supported by the single frame may be the recovery tank. Since the recovery tank is not used as a buffer but only used for the separation of lubrication oil residues (engine-related waste), it may be smaller than the service tank. In addition to the recovery tank also other components may be supported by the single frame, such as the second fuel pump and/or other components of the high-pressure section comprising the second fuel pump. At least some of the components of the high pressure section may be comprised in the skid-mounted assembly, wherein the high-pressure section comprises the second fuel pump, which is a high-pressure pump, heat exchangers configured to heat up or cool down methanol temperature or glycol-water temperature, one or more filters, inert gas supply device, pump for methanol transfer from the recovery tank and a heat exchange medium circuit comprising a heat exchange medium tank, pump and heat exchanger configured to keep the temperature of the heat exchange medium at a determined temperature range for the medium. The temperature range can be for example between 30° and 50°C, but is not limited thereto. The temperature may be lower or higher than within this range.

The heat exchanger device may be connected to the main fuel conduit and be configured to exchange heat with the methanol fuel to bring it to a temperature value within a predefined temperature range. This temperature range is equal to the operative temperature range of the methanol fuel required by the fuel consuming device. The heat exchanger medium may be a glycol-water solution stored in the glycol water tank.

The fuel filtering unit may be connected to the main fuel conduit and be configured for filtering the methanol fuel before being supplied to the fuel consumer device. The fuel filtering unit may comprise a plurality of filter elements, as well as a plurality of filter valves making it possible to have a continuous filtration of the methanol fuel through the fuel filtering unit also during maintenance of one or more of the filter elements. The system may also comprise arrangements for temperature regulation; pressure regulation; flow monitoring; automatic purging of the fuel supply system itself, pre-filtering, and filter double-block-and-bleed isolation. These arrangements and components may be controlled by at least one control device.

The marine vessel may be a carrier ship. The methanol fuel supply system, or at least some components of the methanol fuel supply system may be arranged in the marine vessel. The methanol fuel supply system, or at least some components of the methanol fuel supply system may be arranged on a deck of the marine vessel. The marine vessel may comprise a dedicated explosion safe zone and wherein the dedicated explosion safe zone is configured to accommodate at least some components of the system. The dedicated explosion safe zone may be arranged in marine vessel and/or on a deck of the marine vessel. Methanol is a flammable and toxic liquid, and a dangerously high vapour concentration can be reached in the main fuel conduit in case of leakage. This may lead to a fire if the following conditions are met: the temperature of the methanol fuel is above the flash point; a certain concentration of oxygen is present in the methanol fuel; the ratio of fuel vapour/oxygen is within a certain range; there is an ignition source with a sufficiently high temperature and energy. The dedicated explosion safe zone may eliminate such a risk.

According to a further aspect there is provided a method for operating a methanol fuel supply system according to the first aspect, wherein the method comprises the steps of: supplying methanol fuel to the fuel consuming device turning off the methanol fuel supply to the fuel consuming device; activating a purging circuit, which is fluidly connected to the fuel consuming device and the recovery tank, for removing methanol fuel and any contaminations in the methanol fuel from the fuel consuming device and/or the fuel supply system to the recovery tank by means of an inert gas. In this way, supply of a primary fuel to the fuel consuming device for operating the fuel consuming device can be initiated. The primary fuel and the secondary fuel are different fuels and are delivered from different fuel storage tanks. Shutting down the supply of methanol to the fuel consuming device may be performed by closing a valve or a group of valves on the main fuel conduit and by putting the full supply system in full recycle mode. Activating the purging circuit may be performed automatically. The methanol fuel supply system is able to receive and handle the purged streams and flow. The methanol fuel supply system may also activate and handle the automatic purging of the fuel supply system.

The step of supplying methanol fuel as a secondary fuel from the methanol fuel supply system to the fuel consuming device for operating the fuel consuming device in a second operation mode may comprise, supplying methanol fuel as the secondary fuel by the first fuel pump arranged in the fuel storage tank, which first fuel pump is configured to be submerged in the methanol fuel contained in the fuel storage tank. Submerging the first fuel pump in the methanol fuel may solve criticalities of cavitation without the need of a residual minimum liquid level in the tank. The use of submerged pumps will also solve the issue of installing an external low pressure stage pump in a dedicated explosion safe zone in the marine vessel, which leads to no constraints for the position of a fuel preparation room. The first fuel pump may be controlled by a control device.

The step of supplying methanol fuel as a secondary fuel from the methanol fuel supply system to the fuel consuming device for operating the fuel consuming device in a second operation mode may comprise, supplying methanol fuel as the secondary fuel to a dual-fuel diesel engine as the fuel consuming device for propelling a marine vessel from a methanol fuel supply system arranged in a dedicated explosion safe zone in the marine vessel. The dual-fuel diesel engine may be a marine dual-fuel combustion engine. The dual-fuel combustion engine may operate on the secondary fuel as methanol fuel and on primary fuels like heavy fuel oil or diesel oil or other marine fuel. A separate oil tank, such as a diesel tank, may be fluidly connected to the dual-fuel combustion engine. The dedicated explosion safe zone may be arranged in marine vessel and/or on a deck of the marine vessel.

Effects and features of the second and third aspects are to a large extent analogous to those described above in connection with the first aspect. Embodiments mentioned in relation to the first aspect are largely compatible with the second and third aspects.

Additional objectives, advantages and novel features of the invention will be apparent to one skilled in the art from the following details, and through exercising the invention. While the invention is described below, it should be apparent that the invention may not be limited to the specifically described details. One skilled in the art, having access to the teachings herein, will recognize additional applications, modifications and incorporations in other areas, which are within the scope of the invention.

### Brief descriptions of the drawings

The above objects, as well as additional objects, features and advantages of the present disclosure, will be more fully appreciated by reference to the following illustrative and non-limiting detailed description of example embodiments of the present disclosure, when taken in conjunction with the accompanying drawings.
Fig. 1 schematically illustrates a methanol fuel supply system according to an example;
Fig. 2 schematically illustrates a methanol fuel supply system according to an example;
Fig. 3 schematically illustrates a methanol fuel supply system according to an example;
Fig. 4 schematically illustrates a marine vessel, comprising a methanol fuel supply system.

### Detailed description

The present disclosure will now be described with reference to the accompanying drawings, in which preferred example embodiments of the disclosure are shown. The disclosure may, however, be embodied in other forms and should not be construed as limited to the herein disclosed embodiments. The disclosed embodiments are provided to fully convey the scope of the disclosure to the skilled person.

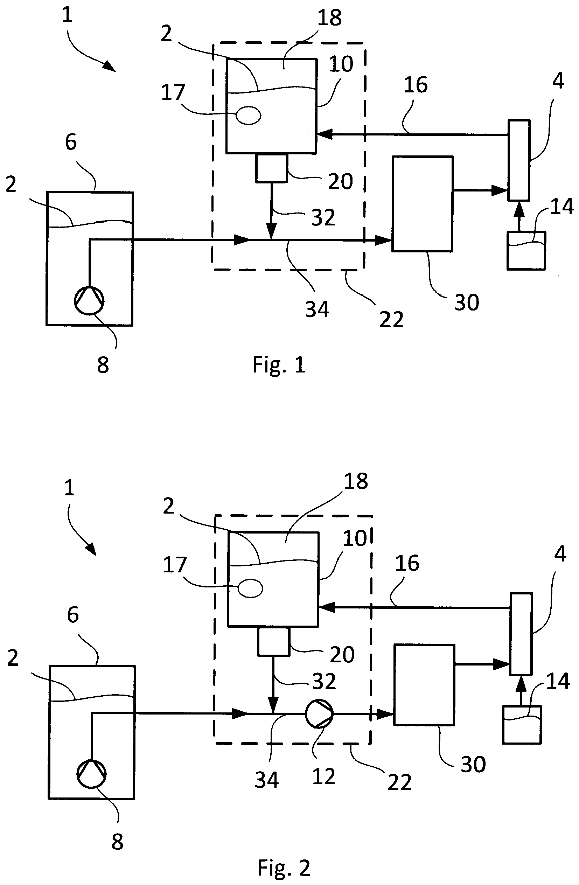

Figure 1 schematically illustrates a methanol fuel supply system 1 according to an example. The methanol fuel supply system 1 is configured to supply methanol fuel 2 to a marine fuel consuming device 4. The fuel consuming device 4 may be a dual-fuel diesel engine. The system 1 comprises a fuel storage tank 6 configured to contain methanol fuel 2 to be delivered to the fuel consuming device 4 and a first fuel pump 8, which is fluidly connected to the fuel storage tank 6 and to the fuel consuming device 4 via a main fuel conduit 34. The first fuel pump 8 is arranged in the fuel storage tank 6 and is configured to be submerged in the methanol fuel 2 contained in the fuel storage tank 6. The system 1 further comprises a recovery tank 10, which is fluidly connected to the fuel consuming device 4 via a purging circuit 16 and a connecting conduit 32. The recovery tank 10 is configured to collect and recover methanol fuel 2 purged from the fuel consuming device 4 and is smaller than the previously used service tanks. The recovery tank does not serve as buffer but can be only used for the separation of lubrication oil resides (engine-related waste), and for this reason it can be smaller than a previously used service tank located on the deck. The recovery tank may comprise a connection for a sealing oil drain.

The fuel consuming device 4 is a dual-fuel driven fuel consuming device, configured to be driven by a primary fuel 14 in a first operation mode, and to be driven by methanol fuel 2 as a secondary fuel in a second operation mode.

The system 1 further comprises the above-mentioned purging circuit 16, which is fluidly connected to the fuel consuming device 4 and the recovery tank 10, and which purging circuit 16 is configured to remove methanol fuel 2 and any contaminations 17 in the methanol fuel 2 from the fuel consuming device 4 to the recovery tank 10 by means of an inert gas 18, which may be nitrogen. This is done when the fuel consuming device switches to the primary fuel mode A skid-mounted assembly 22 supports the recovery tank 10 and at least some of conduits, valves and other equipment for the fluidic connection between the storage tank 6 and the fuel consuming device 4 may be comprised in the assembly 22. The skid-mounted assembly is a module, which can be delivered and mounted as a retrofit to an existing vessel.

The recovery tank 10 is configured to separate the methanol fuel 2, the inert gas 18 and contaminations 17 in the recovery tank 10 from each other. The separation may occur by settling, but the recovery tank 10 may additionally comprise a separator arrangement 20. The recovery tank is configured to return the recovered methanol fuel 2 to the fuel consuming device 4, when high level in the recovery tank is detected and the fuel consuming device is running on methanol and methanol is consumed, i.e., during the second operation mode. The return may be performed for example by means of inert gas pressurization or by means of a pump. The recovered methanol fuel 2 is returned to the fuel consuming device 4 through a connecting conduit 32 from the separator arrangement 20 to a main fuel conduit 34, which connects the storage tank 6 and the first fuel pump 8 to the fuel consuming device passing through a fuel valve train 30.

Fig. 2 schematically illustrates a methanol fuel supply system 1 according to another example. The system 1 according to this example comprises the second fuel pump 12, arranged downstream of the first fuel pump 8 and upstream of the fuel valve train 30 and the fuel consuming device 4. The second fuel pump 12 is arranged downstream of a connection point between the connecting conduit 32 from the recovery tank 10 and the main fuel conduit 34. The second fuel pump 12 may be a high-pressure fuel pump. The second fuel pump 12 is arranged on the skid-mounted assembly 22.

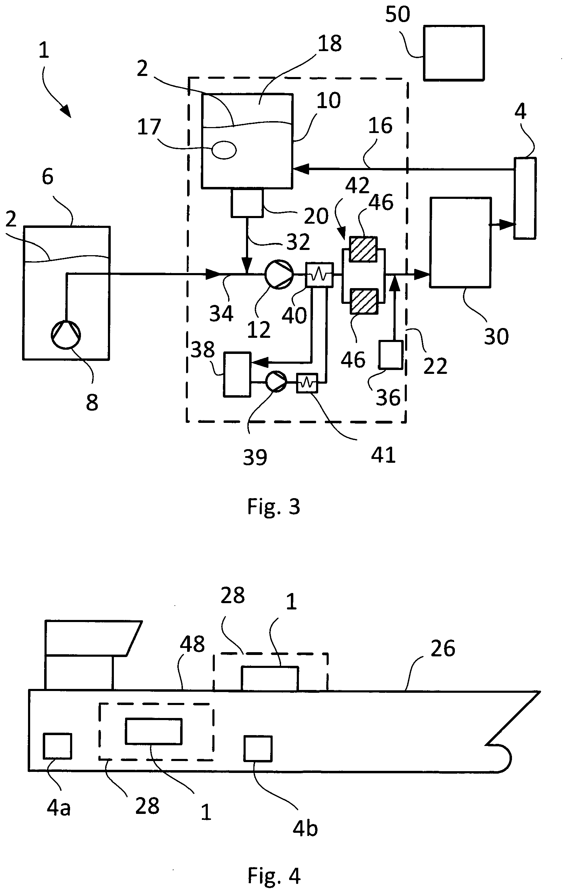

Fig. 3 schematically illustrates a more detailed view of the methanol fuel supply system 1 according to the present disclosure. The skid-mounted assembly 22 is arranged to support a number of components downstream of the fuel storage tank 6 of the system 1. The recovery tank 10 with an optional separator arrangement 20 and a second fuel pump 12, which is connected to the main fuel conduit 34, are supported by the skid-mounted assembly 22. The skid-mounted assembly 22 may be connected to an inert gas source 36. Further, the assembly may comprise a glycol water tank 38, a methanol heat exchanger device 40 and a fuel filtering unit 42 comprising a plurality of filter elements 46. The filter unit 42 may be equipped with double-block and bleed isolation to allow cleaning operation in safe conditions. The methanol heat exchanger device 40 may be connected to the main fuel conduit 34 and be configured to exchange heat with the methanol fuel to bring it to a temperature value within a predefined temperature range. The heat exchanger medium may be a glycol-water solution stored in the glycol water tank 38. A glycol water pump 39 and a glycol water heat exchanger 41 are fluidly connected to the glycol water tank 38. The fuel filtering unit 42 may be connected to the main fuel conduit 34 and be configured for filtering the methanol fuel before being supplied to the fuel consuming device 4. The components of the system 1 described above may be controlled by a control device 50. The components arranged downstream of the high-pressure pump 12 are comprised in a high-pressure section, which may be mounted on the assembly 22. The assembly 22 may be located in a fuel preparation room.

Fig. 4 schematically illustrates a marine vessel 26, comprising the methanol fuel supply system 1. The marine vessel 26 may be a carrier ship. The marine vessel 26 comprises the methanol fuel supply system 1, which is configured to supply methanol fuel 2 to a marine fuel consuming device 4 arranged on the marine vessel 26. The high-pressure section of the fuel supply system may be mounted on the assembly 22 as shown in Fig. 3. The fuel consuming device 4 may be a dual-fuel diesel engine 4a. Instead of a dual-fuel diesel engine 4a or in combination with the dual-fuel diesel engine 4a, the fuel consuming device 4 may be a boiler 4b or another marine diesel engine. The system 1 is arranged in a dedicated fuel preparation room 28 inside the marine vessel 26. Alternatively, or in combination, the system 1 may be arranged in a dedicated fuel preparation room 28 on a deck 48 of the marine vessel 26. The storage tank 6 is placed onboard a vessel according to IMO regulations.

The present disclosure further relates to a method for supplying fuel to a marine fuel consuming device 4 by means of a methanol fuel supply system 1. The method comprises the steps of: supplying methanol fuel 2 from the methanol fuel supply system 1 to the fuel consuming device 4 for operating the fuel consuming device 4; turning off the methanol fuel supply to the fuel consuming device 4; activating s103 a purging circuit 16, which is fluidly connected to the fuel consuming device 4 and the recovery tank 10, for removing methanol fuel 2 and any contaminations 17 in the methanol fuel 2 from the fuel consuming device 4 to the recovery tank 10 by means of an inert gas 18.

The step of supplying methanol fuel 2 may comprise supplying methanol fuel 2 by at least the first fuel pump 8 arranged in the fuel storage tank 6, which first fuel pump 8 is submerged in the methanol fuel 2 contained in the fuel storage tank 6.

The step of supplying methanol fuel may comprise supplying methanol fuel 2 to at least one dual-fuel diesel engine as the fuel consuming device 4 for propelling a marine vessel 26 from a methanol fuel supply system 1 arranged in a dedicated fuel preparation room 28 in the marine vessel 26. The fuel supply system may be configured to supply more than one parallel fuel consuming devices simultaneously.

The foregoing description of the embodiments has been furnished for illustrative and descriptive purposes. It is not intended to be exhaustive, or to limit the embodiments to the variations described. Many modifications and variations will obviously be apparent to one skilled in the art. The embodiments have been chosen and described in order to best explicate principles and practical applications, and to thereby enable one skilled in the art to understand the invention in terms of its various embodiments and with the various modifications that are applicable to its intended use. The components and features specified above may, within the framework of the disclosure, be combined between different embodiments specified.

## Claims

1. A methanol fuel supply system (1) for supplying methanol fuel (2) from a fuel storage tank (6) configured to contain methanol fuel (2) to at least one marine fuel consuming device (4), the system (1) comprising:
a first fuel pump (8), which is fluidly connected to the fuel storage tank (6) and to the fuel consuming device (4), **characterized in**
**that** the system (1) comprises a recovery tank (10), which is fluidly connected to the fuel consuming device (4), and
a purging circuit (16) configured to purge the fuel consuming device (4) and/or the fuel supply system with an inert gas, the purging circuit being fluidly connected to the fuel consuming device and the recovery tank (10), and wherein
the recovery tank (10) is configured to collect methanol fuel and inert gas (2) during purging.

2. The system (1) according to claim 1, wherein the first fuel pump (8) is arranged in the fuel storage tank (6) and is configured to be submerged in the methanol fuel (2) contained in the fuel storage tank (6).

3. The system (1) according to claim 1 or 2 comprising a high-pressure section in fluid connection with the fuel storage tank (6) and the fuel consuming device (4) and comprising one or more of: a second fuel pump (12), which is a high-pressure pump, at least one heat exchanger (40) configured to heat up or cool down methanol temperature, one or more filters (46), inert gas supply device (36), a pump or other pressurizing means for transferring liquid from the recovery tank (10), and a heat exchange medium circuit comprising a heat exchange medium tank (38), pump (39) and at least one heat exchanger (41) configured to keep the temperature of the heat exchange medium at a determined temperature range..

4. The system (1) according to claim 1, 2 or 3, wherein the recovery tank (10) is fluidly connected by a connecting conduit (32) to a main fuel conduit (34) connecting the storage tank (6) and the first fuel pump (8) to the fuel consuming device (4).

5. The system (1) according to any one of the preceding claims, wherein the system (1) comprises the second fuel pump (12), which is arranged downstream of the first fuel pump (8) and upstream of the fuel consuming device (4).

6. The system (1) according to claim 5, wherein the recovery tank (10) is connected via the connecting conduit (32) to the main fuel conduit (34) upstream of the second fuel pump (12).

7. The system (1) according to any one of the preceding claims, wherein the fuel consuming device (4) is a dual-fuel driven fuel consuming device, configured to be driven by a primary fuel (14) in a first operation mode, and to be driven by methanol fuel (2) as a secondary fuel in a second operation mode.

8. The system (1) according to any one of the preceding claims, wherein the recovery tank (10) is configured to separate the methanol fuel (2), inert gas (18) and contaminations (17) from each other and to return the recovered methanol fuel (2) to the fuel consuming device (4).

9. The system (1) according to any one of the preceding claims, **characterized in that** a skid-mounted assembly (22) is arranged to support at least some of the components downstream of the fuel storage tank (6).

10. The system (1) according to claim 9, wherein one of the components supported by the single frame (24) is the recovery tank (10).

11. The system (1) according to any of the preceding claims, wherein the marine fuel consuming device (4) comprises an internal combustion engine and/or a boiler.

12. The system (1) according to any one of claims 1-11 being configured to feed more than one parallelly connected fuel consuming devices.

13. A method for operating a methanol fuel supply system (1) according to any one of the preceding claims, wherein the method comprises the steps of:
supplying methanol fuel (2) to at least one fuel consuming device (4);
turning off the methanol fuel supply to the fuel consuming device (4);
activating a purging circuit (16), which is fluidly connected to the fuel consuming device (4) and the recovery tank (10), for removing methanol fuel (2) and any contaminations (17) in the methanol fuel (2) from the fuel consuming device (4) and/or the fuel supply system (1) to the recovery tank (10) by means of an inert gas (18).

14. The method according to claim 13, wherein the step of supplying (s101) methanol fuel (2) comprises supplying methanol fuel (2) by at least the first fuel pump (8) arranged in the fuel storage tank (6), which first fuel pump (8) is configured to be submerged in the methanol fuel (2) contained in the fuel storage tank (6).

15. The method according to claim 14, wherein the step of supplying (s101) methanol fuel comprises supplying methanol fuel (2) to at least one dual-fuel diesel engine as the fuel consuming device (4) for propelling a marine vessel (26) from a methanol fuel supply system (1) arranged in a dedicated fuel preparation room (28) in the marine vessel (26).
